# EUROPEAN PATENT SPECIFICATION

(11) **EP 2 514 120 B1**
(45) Date of publication and mention of the grant of the patent: **07.02.2018**
(21) Application number: 10793224.6
(22) Date of filing: 15.12.2010
(51) Int. Cl.: H04B 10/2507, H04B 10/61, H04B 10/67, H04B 10/69, H04J 14/06

(54) **Apparatus and method for receiving a polarisation-multiplexed optical signal**
System und Verfahren zum Empfang optischer Polarisationsmultiplexsignale
Appareil et procédé de réception de signaux optiques multiplexés en polarisation

(30) Priority: 18.12.2009 EP 09180000
(43) Date of publication of application: 24.10.2012
(73) Proprietor: Xieon Networks S.à r.l., 2633 Senningerberg (LU)
(72) Inventor: JANSEN, Sander, 81379 Munich (DE); STAHL, David, 85716 Unterschleißheim (DE)
(74) Representative: Lucke, Andreas
(86) International application number: PCT/EP2010/069703
(87) International publication number: WO 2011/073230

(56) References cited:
- US-A1- 2003 063 833
- XUEYAN ZHENG ET AL: "Suppression of Interferometric Crosstalk and ASE Noise Using a Polarization Multiplexing Technique and an SOA", IEEE PHOTONICS TECHNOLOGY LETTERS, IEEE SERVICE CENTER, PISCATAWAY, NJ, US, vol. 12, no. 8, 1 August 2000 (2000-08-01) , XP011047270, ISSN: 1041-1135
- HEISMANN F ET AL: "AUTOMATIC POLARIZATION DEMULTIPLEXER FOR POLARIZATION-MULTIPLEXED TRANSMISSION SYSTEMS", PROCEEDINGS OF THE EUROPEAN CONFERENCE ON OPTICAL COMMUNICATION (ECOC) MONTREUX, SEPT. 12 - 16, 1993. REGULAR PAPERS; [PROCEEDINGS OF THE EUROPEAN CONFERENCE ON OPTICAL COMMUNICATION (ECOC)], ZURICH, SEV, CH, vol. 2, 12 September 1993 (1993-09-12), pages 401-404, XP000492247,
- GARCIA GUNNING F C ET AL: "0.6Tbit/s Capacity and 2bit/s/Hz Spectral Efficiency at 42.6Gsymbol/s Using a Single DFB Laser with NRZ Coherent WDM and Polarisation Multiplexing", LASERS AND ELECTRO-OPTICS, 2007 AND THE INTERNATIONAL QUANTUM ELECTRON ICS CONFERENCE. CLEOE-IQEC 2007. EUROPEAN CONFERENCE ON, IEEE, PI, 1 June 2007 (2007-06-01), pages 1-1, XP031162914, ISBN: 978-1-4244-0930-3
- CHANDRASEKHAR S ET AL: "Experimental Investigation of System Impairments in Polarization Multiplexed 107-Gb/s RZ-DQPSK", OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24 February 2008 (2008-02-24), pages 1-3, XP031391651, ISBN: 978-1-55752-856-8
- NAKAMURA M ET AL: "Linewidth-tolerant 30â Gbit/s 8-PSK self-homodyne using single modulator and phase-noise cancelling technique", THE INSTITUTION OF ENGINEERING AND TECHNOLOGY. JOURNAL,, vol. 45, no. 7, 26 March 2009 (2009-03-26) , pages 368-369, XP006032902, ISSN: 1350-911X
- CONTESTABILE G ET AL: "Investigation of Transparency of FWM in SOA to Advanced Modulation Formats Involving Intensity, Phase, and Polarization Multiplexing", JOURNAL OF LIGHTWAVE TECHNOLOGY, IEEE SERVICE CENTER, NEW YORK, NY, US LNKD- DOI:10.1109/JLT.2009.2023091, vol. 27, no. 19, 1 October 2009 (2009-10-01), pages 4256-4261, XP011268848, ISSN: 0733-8724
- "POLARIZATION ROTATORS/CONTROLLERS/ANALYZERS", OZ Optics Limited , 14 June 2005 (2005-06-14), pages 1-6, XP002580173, Retrieved from the Internet: URL:http://www.ozoptics.com/ALLNEW_PDF/DTS 0072.pdf [retrieved on 2010-04-28]

## Description

### FIELD OF THE INVENTION

The present invention refers to optical receivers and methods for receiving optical signals, and in particular to improved methods and apparatus for reducing system deteriorations due to polarization effects.

### BACKGROUND OF THE INVENTION

Conventional fiber-optic transmission systems typically use direct detection and operate at 10 Gb/s and 40 Gb/s. However, especially at 40 Gb/s and above these direct detection systems offer a low tolerance to linear impairments such as chromatic dispersion (CD) and polarization mode dispersion (PMD). The tolerance towards these linear impairments can be increased significantly through the use of conventional coherent detection. In combination with digital signal processing, conventional coherent receivers, and in particular conventional polarization diverse coherent detectors, can provide a better tolerance towards chromatic dispersion (CD) and polarization mode dispersion (PMD) and significant benefits with respect to amplified spontaneous emission (ASE) noise.

In conventional applications, a polarization diverse coherent detector is often combined with a polarization multiplexed (POLMUX) signal. A POLMUX signal carries information on the two states of polarization that single-mode fiber supports and allows to double the spectral efficiency of a transmission system. However, polarization multiplexed signals are affected by polarization dependant loss (PDL) resulting in signal degradation and higher bit error rate (BER) which limits maximum transmission distance.

In conventional coherent receivers optical amplification is required in order to enhance the data before that the signal can be detected. In most receivers an erbium-doped fiber amplifier (EDFA) is used for this amplification. Semiconductor Optical Amplifiers (SOAs) can be used as an alternative to erbium-doped fiber amplifiers. The Semiconductor Optical Amplifiers (SOAs) although being cost-effective amplifiers with a small form factor, unfortunately exhibit a polarization dependent gain (PDG), resulting in deterioration of system performance.

Document Heismann et al.: "Automatic polarisation demultiplexer for polarisation-multiplexed transmission systems", ECOC Montreux, Sept. 12 - 16, 1993 ; Regular papers, Zürich, SEV, CH, Vol.2; 12 September 1993, pages 401-404, XP000492247 discloses an polarisation multiplexed transmission system with an polarisation transformer outputting a polmux signal with constant polarisation axes.

Based upon the above discussions, it is concluded that there is a need in the art, for an improved optical receiving apparatus for receiving a polarization multiplexed optical signal and an improved method for receiving an optical signal. The improved optical receiving apparatus and method for receiving an optical signal should be capable of significantly reducing the influence of polarization dependent gain (PDG) and polarization dependant loss (PDL) therefore improving the signal's performance.

### SUMMARY OF THE INVENTION

In order to overcome the above-described need in the art, the present invention discloses an optical receiving apparatus for receiving a polarization multiplexed optical signal, comprising a polarization dependent element receiving the polarization multiplexed optical signal, wherein said polarization dependent element has principal axes of polarization;
a polarization diverse receiving element having principal axes of polarization being aligned to the principal axes of polarization of the polarization dependent element;
a polarization maintaining optical element having aligned principal axes of polarization, said polarization maintaining optical element connecting an output of the polarization dependent element with the polarization diverse optical receiving element, wherein the polarization diverse optical receiving element includes at least one electrical amplifier adapted to calibrate out the polarization dependent gain (PDG) or polarization dependent loss (PDL) induced by the polarization dependent element.

In a further embodiment, the polarization maintaining optical element may be a polarization maintaining optical fiber.

In a next embodiment, the polarization dependent element may be a polarization dependent gain element.

In an alternative embodiment of the invention, the polarization dependent element may be a polarization dependent loss element.

In a further embodiment, the polarization dependent gain element may be a semiconductor optical amplifier.

It is also an embodiment, that the polarization dependent gain element is an erbium doped optical amplifier.

The problem stated above is also solved by a method for receiving an optical signal, the method comprising the steps of receiving the polarization multiplexed optical signal by a polarisation depending element having principal axes of polarization;
conveying an output signal of the polarisation depending element via a polarization maintaining optical element having principal axes of polarization directly an polarization diverse to a polarization diverse optical receiving element;
receiving the output signal by the polarization diverse optical receiving element having principal axes of polarization being aligned to the principal axes of polarization of the polarisation depending element and the polarization maintaining optical element, and calibrating out the polarization dependent gain (PDG) or polarization dependent loss (PDL) induced by the polarization dependent element by utilizing at least one electrical amplifier included in the polarization diverse optical receiving element.

The method is executed wherein
the polarisation depending element is a semiconductor optical amplifier, the polarization maintaining optical element (3) is a polarization maintaining fiber, and the polarization diverse receiving element is a coherent polarization depending receiving element.

### BRIEF DESCRIPTION OF THE DRAWINGS

The invention is explained by way of example in more detail below with the aid of the attached drawings.
FIG 1 is a high level block diagram which illustrates an optical receiving apparatus according to an embodiment of the invention;
FIG 2 is an illustration of the coordinate systems of the polarization diverse optical receiving element, the polarization dependent element and the polarization maintaining optical element according to an embodiment of the invention.

### DESCRIPTION OF THE INVENTION

Illustrative embodiments will now be described with reference to the accompanying drawings to disclose the teachings of the present invention. While the present invention is described herein with reference to illustrative embodiments for particular applications, it should be understood that the invention is not limited thereto. Those having ordinary skill in the art and access to the teachings provided herein will recognize additional modifications, applications, and embodiments within the scope thereof and additional fields in which the present invention would be of significant utility.

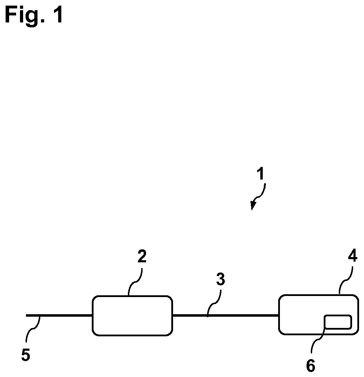

FIG 1 is a high level block diagram which illustrates an optical receiving apparatus 1 for receiving an optical signal 5, which may be a polarization multiplexed optical signal, according to one embodiment of the invention. The optical receiving apparatus 1 includes a polarization diverse optical receiving element 4, which may be a polarization diverse optical receiver, a polarization maintaining optical element 3, (for example a polarization maintaining optical fiber) directly coupled with the polarization diverse optical receiving element 4 and a polarization dependent element 2 directly coupled with the polarization maintaining optical element 3.

According to an embodiment of the invention, the polarization maintaining optical element 3 is directly connected to the polarization diverse optical receiving element 4 at one end, and to the polarization dependent element 2 at the other end.

By the polarization maintaining optical fiber is meant a birefringent fiber having two principal axes of polarization, also known as the fast and the slow axis, and which supports two well defined orthogonal propagation modes of light whose refractive indices differ by 10⁻⁶ or more.

According to an embodiment of the invention, the coordinate system of the polarization maintaining optical element 3 is aligned to the coordinate system of the polarization diverse optical receiving element 4, and to the coordinate system of the polarization dependent element 2, so that both coordinate systems coincide with each other.

In embodiments of the present invention, the polarization dependent element 2 is a polarization dependent gain element and in particular a semiconductor optical amplifier, like for example an erbium doped optical amplifier or a semiconductor optical amplifier (SOA).

In embodiments of the present invention, the polarization dependent element 2 is a polarization dependent loss element.

In both cases the alignment of the polarization maintaining optical element 3 fixes the transformation of the polarization dependent gain (PDG) vector or polarization dependent loss (PDL) vector to the coordinate system of the coherent optical receiving element 4 so that both coordinate systems coincide with each other.

In embodiments of the present invention, the polarization diverse optical receiving element 4 includes an electrical amplifier 6 or a plurality of electrical amplifiers 6 and a plurality of analog-to-digital converters (ADCs).

Fixing the relation between the coordinate system of the polarization diverse optical receiving element 4 and the coordinate system of the polarization dependent element 2, which may be a polarization dependent gain element or a polarization dependent loss element gain element, it is possible to calibrate out the polarization dependent gain (PDG) or polarization dependent loss (PDL) induced by the polarization dependent element 2 utilizing the electrical amplifiers 6 that may be used at the polarization diverse optical receiving element 4 preferably before the analog-to-digital converters (ADCs).

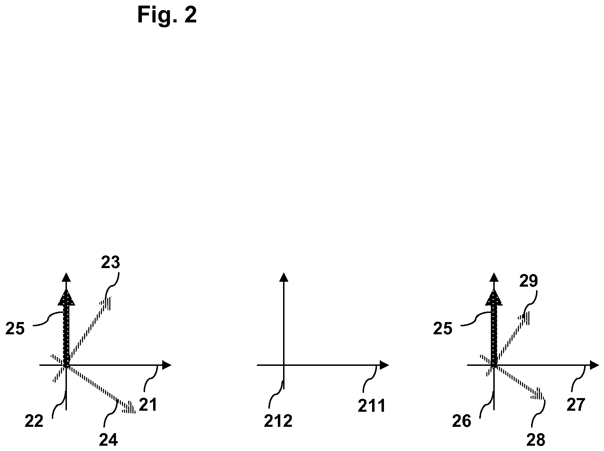

FIG 2 is an illustration of the coordinate systems of the polarization diverse optical receiving element 4, the polarization dependent element 2 and the polarization maintaining optical element 3 according to an embodiment of the invention.

The coordinate system of the polarization diverse optical receiving element 4 includes the two principal orthogonal axes, the principal axis 26 and the principal axis 27; the coordinate system of the polarization dependent element 2 includes the two principal orthogonal axes, the principal axis 21 and the principal axis 22; the coordinate system of the polarization maintaining optical element 3 includes the two principal orthogonal axes, the principal axis 211 and the principal axis 212.

The polarization maintaining optical element 3 fixes the transformation of the polarization dependent element vector 25 to the coordinate system of the polarization diverse optical receiving element 4 so that the coordinate system of the polarization dependent element 2 including the principal axis 21 and 22 coincide with the coordinate system of the polarization diverse optical receiving element 4 including the two principal axis 26 and the principal axis 27.

Being the principal axes orthogonal, it is sufficient that a principal axis of polarization 211 or 212 of the polarization maintaining optical element 3 is aligned with a principal axis of polarization 26 or 27 of the polarization diverse optical receiving element 4 and that a principal axis of polarization 211 or 212 of the polarization maintaining optical element 3 is aligned with a principal axis of polarization 21 or 22 of the polarization dependent element 2.

Known methods are available to the person skilled in the art to perform this alignment.

As a result of the discussed alignment, the effect of polarization dependent gain or polarization dependent loss on the orthogonal components 23 and 24 of the optical signal at the polarization dependent element 2 are substantially reduced and equally distributed over the two orthogonal components 28 and 29 at the polarization diverse optical receiving element 4. These effects can be further reduced utilizing the electrical amplifiers 6 that may be used at the polarization diverse optical receiving element 4 preferably before the analog-to-digital converters (ADCs).

## Claims

1. An optical receiving apparatus with a polarization diverse receiving element (4) for receiving a polarization multiplexed optical signal, comprising:
a polarization dependent element (2) receiving the polarization multiplexed optical signal (5), wherein said polarization dependent element (2) has principal axes of polarization (21, 22);
the polarization diverse receiving element (4) having principal axes of polarization (27, 26) being aligned to the principal axes of polarization (21, 22) of the polarization dependent element (2); and
**characterized by**
a polarization maintaining optical element (3), said polarization maintaining optical element (3) connecting an output of the polarization dependent element (2) with the polarization diverse optical receiving element (4),
wherein the polarization diverse optical receiving element (4) includes at least one electrical amplifier (6)adapted to calibrate out the polarization dependent gain (PDG) or polarization dependent loss (PDL) induced by the polarization dependent element (2).

2. The apparatus as in claim 1, wherein the polarization maintaining optical element is a polarization maintaining optical fiber.

3. The apparatus as in claim 1 or 2, wherein the polarization dependent element (2) is a polarization dependent gain element.

4. The apparatus as in claim 3, the polarization dependent gain element being a semiconductor optical amplifier.

5. The apparatus as in claim 3, wherein the polarization dependent gain element is an erbium doped optical amplifier.

6. The apparatus as in claim 1, wherein the polarization dependent element (2) is a polarization dependent loss element.

7. A method for receiving a polarization multiplexed optical signal by an optical receiving apparatus, the method comprising the steps of:
receiving the polarization multiplexed optical signal (5) by a polarization dependent element (2) having principal axes of polarization (21, 22);
**characterized by**
conveying an output signal of the polarization dependent element (2) via a polarization maintaining optical element (3) directly to a polarization diverse optical receiving element (4);
receiving the output signal by the polarization diverse optical receiving element (4) having principal axes of polarization (27, 26) being aligned to the principal axes of polarization (21, 22; 211, 212) of the polarization dependent element (2), and
calibrating out the polarization dependent gain (PDG) or polarization dependent loss (PDL) induced by the polarization dependent element by utilizing at least one electrical amplifier (6) included in the polarization diverse optical receiving element (4).

8. The method of claim 7, wherein
the polarisation dependent element (2) is a semiconductor optical amplifier, the polarization maintaining optical element (3) is a polarization maintaining fiber, and the polarization diverse receiving element (4) is a coherent optical receiving element.

## Patentansprüche

1. Optische Empfangsvorrichtung mit einem Polarisationsdiversity-Empfangselement (4) zum Empfangen eines optischen Polarisationsmultiplexsignals, die Folgendes umfasst:
ein polarisationsabhängiges Element (2), welches das optische Polarisationsmultiplexsignal (5) empfängt, wobei das polarisationsabhängige Element (2) Hauptachsen der Polarisation (21, 22) aufweist;
wobei das Polarisationsdiversity-Empfangselement (4) Hauptachsen der Polarisation (27, 26) hat, die mit den Hauptachsen der Polarisation (21, 22) des polarisationsabhängigen Elements (2) ausgerichtet sind; und
**gekennzeichnet durch**
ein polarisationserhaltendes optisches Element (3), wobei das polarisationserhaltende optische Element (3) einen Ausgang des polarisationsabhängigen Elements (2) mit dem optischen Polarisationsdiversity-Empfangselement (4) verbindet,
wobei das optische Polarisationsdiversity-Empfangselement (4) mindestens einen elektrischen Verstärker (6) umfasst, der geeignet ist, den polarisationsabhängigen Gewinn oder polarisationsabhängigen Verlust auszulcalibrieren, der durch das polarisationsabhängige Element (2) induziert wird.

2. Vorrichtung nach Anspruch 1, wobei das polarisationserhaltende optische Element eine polarisationserhaltende optische Faser ist.

3. Vorrichtung nach Anspruch 1 oder 2, wobei das polarisationsabhängige Element (2) ein polarisationsabhängiges Verstärkungselement ist.

4. Vorrichtung nach Anspruch 3, wobei das polarisationsabhängige Verstärkungelement ein halbleiterbasierter optischer Verstärker ist.

5. Vorrichtung nach Anspruch 3, wobei das polarisationsabhängige Verstärkungselement ein mit Erbium dotierter optischer Verstärker ist.

6. Vorrichtung nach Anspruch 1, wobei das polarisationsabhängige Element (2) ein polarisationsabhängiges Verlustelement ist.

7. Verfahren zum Empfangen eines optischen Polarisationsmultiplexsignals mit einer optischen Empfangsvorrichtung, wobei das Verfahren die folgenden Schritte umfasst:
Empfangen des optischen Polarisationsmultiplexsignals (5) durch ein polarisationsabhängiges Element (2), welches Hauptachsen der Polarisierung (21, 22) aufweist;
**gekennzeichnet durch**
das Übertragen eines Ausgangsignals des polarisationsabhängigen Elements (2) über ein polarisationserhaltendes optisches Element (3) direkt zu einem optischen Polarisationsdiversity-Empfangselement (4);
Empfangen des Ausgangssignals durch das optische Polarisationsdiversity-Empfangselement (4), welches Hauptachsen der Polarisation (27, 26) hat, die mit den Hauptachsen der Polarisation (21, 22; 211, 212) des polarisationsabhängigen Elements (2) ausgerichtet sind, und
Auskalibrieren des polarisationsabhängigen Gewinns oder des polarisationsabhängigen Verlusts, der durch das polarisationsabhängige Element induziert wird, indem mindestens ein elektrischer Verstärker (6) verwendet wird, der in dem optischen Polarisationsdiversity-Empfangselement (4) enthalten ist.

8. Verfahren nach Anspruch 7, wobei das polarisationsabhängige Element (2) ein halbleiterbasierter optischer Verstärker ist, das polarisationserhaltende optische Element (3) eine polarisationserhaltende Faser ist, und das Polarisationsdiversity-Empfangselement (4) ein koherentes optisches Empfangselement ist.

## Revendications

1. Appareil de réception optique avec un élément de réception de diversité de polarisations (4) pour recevoir un signal optique multiplexé en polarisation, comprenant :
un élément dépendant de la polarisation (2) recevant le signal optique multiplexé en polarisation (5), dans lequel ledit élément dépendant de la polarisation (2) a des axes de polarisation principaux (21, 22) ;
l'élément de réception de diversité de polarisations (4) ayant des axes de polarisation principaux (27, 26) qui sont alignés avec les axes de polarisation principaux (21, 22) de l'élément dépendant de la polarisation (2) ; et
**caractérisé par**
un élément optique de maintien de polarisation (3), ledit élément optique de maintien de polarisation (3) connectant une sortie de l'élément dépendant de la polarisation (2) avec l'élément optique de réception de diversité de polarisations (4),
dans lequel l'élément optique de réception de diversité de polarisations (4) comprend au moins un amplificateur électrique (6) conçu pour étalonner le gain dépendant de la polarisation (PDG) ou la perte dépendant de la polarisation (PDL) induit par l'élément dépendant de la polarisation (2).

2. Appareil selon la revendication 1, dans lequel l'élément optique de maintien de polarisation est une fibre optique à maintien de polarisation.

3. Appareil selon la revendication 1 ou 2, dans lequel l'élément dépendant de la polarisation (2) est un élément à gain dépendant de la polarisation.

4. Appareil selon la revendication 3, dans lequel l'élément à gain dépendant de la polarisation est un amplificateur optique à semi-conducteurs.

5. Appareil selon la revendication 3, dans lequel l'élément à gain dépendant de la polarisation est un amplificateur optique dopé à l'erbium.

6. Appareil selon la revendication 1, dans lequel l'élément dépendant de la polarisation (2) est un élément à perte dépendant de la polarisation.

7. Procédé pour recevoir un signal optique multiplexé en polarisation par un appareil de réception optique, le procédé comprenant les étapes :
de réception du signal optique multiplexé en polarisation (5) par un élément dépendant de la polarisation (2) ayant des axes de polarisation principaux (21, 22) ;
**caractérisé par**
le transport d'un signal de sortie de l'élément dépendant de la polarisation (2) par l'intermédiaire d'un élément optique de maintien de polarisation (3) directement vers un élément optique de réception de diversité de polarisations (4) ;
la réception du signal de sortie par l'élément optique de réception de diversité de polarisations (4) ayant des axes de polarisation principaux (27, 26) qui sont alignés avec les axes de polarisation principaux (21, 22 ; 211, 212) de l'élément dépendant de la polarisation (2), et
l'étalonnage du gain dépendant de la polarisation (PDG) ou de la perte dépendant de la polarisation (PDL) induit par l'élément dépendant de la polarisation en utilisant au moins un amplificateur électrique (6) inclus dans l'élément optique de réception de diversité de polarisations (4).

8. Procédé selon la revendication 7, dans lequel
l'élément dépendant de la polarisation (2) est un amplificateur optique à semi-conducteurs, l'élément optique de maintien de polarisation (3) est une fibre maintenant la polarisation, et l'élément de réception de diversité de polarisations (4) est un élément de réception optique cohérent.
